# EUROPEAN PATENT SPECIFICATION

(11) **EP 1 724 072 B1**
(45) Date of publication and mention of the grant of the patent: **11.03.2009**
(21) Application number: 05010949.5
(22) Date of filing: 20.05.2005
(51) Int. Cl.: B25J 9/22, B25J 13/08

(54) **Accelerometer to monitor movement of a tool assembly attached to a robot end effector**
Beschleunigungsmesser zur Bewegungsregelung eines an einem Roboter-Endeffektor befestigten Werkzeugs
Accéléromètre pour contrôler le mouvement d'un outil fixé à un effecteur terminal de robot

(43) Date of publication of application: 22.11.2006
(73) Proprietor: ABB Research Ltd., 8050 Zürich (CH)
(72) Inventor: Zhang, George, Windsor CT 06095 (US); Sun, Yun Quan, East Windsor, CT 06088 (US); Wang, Jian Jun, West Hartford CT 06119 (US); Gan, Zhongxue, Windsor CT 06095 (US); Zhang, Hui, West Hartford CT 06117 (US); Rossano, Gregory F., Enfield CT 06082 (US)
(74) Representative: Marks, Frank

(56) References cited:
- EP-A- 0 145 991
- EP-A- 0 440 588
- US-A- 4 207 953
- US-A- 4 589 810
- US-B1- 6 385 508

## Description

### 1. Field of the Invention

This invention relates to multi-axis manipulator systems such as robots and more particularly to the monitoring of the movement of a tool assembly attached to the robot end effector.

### 2. Description of the Prior Art

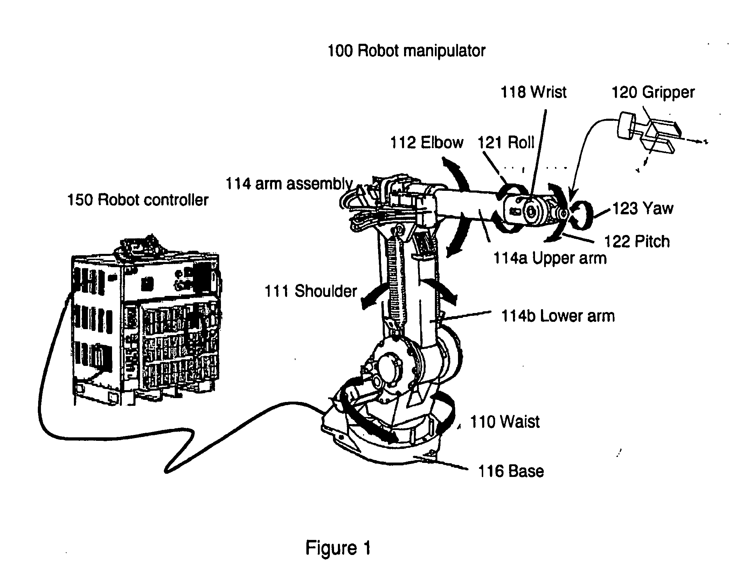

Robots and other multi-axis manipulator systems are used in an increasing number of industrial and commercial applications to perform precise and repetitive movements with a minimum of human intervention. For example, robots are used to apply spray paint to automobile door panels, to weld components together, to remove burrs by abrasion material from workpieces and to apply sealant to joints. Properly programmed robots are highly repeatable and reliable. The commonly used six-axis industrial robot manipulator 100 is shown in Fig. 1.

Robot systems typically include a manipulator and a computer-based controller. The commonly used six-axis industrial robot manipulator 100 includes an arm assembly 114 comprising upper arm 114a and lower arm 114b. The arm assembly 114 has one end mounted through waist 110 to a base 116, and a wrist 118 on the opposite end. A grasping mechanism 120 configured to receive the tool or workpiece to be moved by the robot manipulator 100 is mounted to the wrist 118. The grasping mechanism 120 and workpiece, or whatever devices are mounted to the robot wrist 118, are together known generally as an end effector and that term is used herein to refer to grasping mechanism or gripper 120.

The robot arm assembly 114 can be driven about waist 110, shoulder 111 and elbow 112 axes (representing three degrees of freedom) to position the wrist 118 and thus the end effector 120 at any desired position within the operating range of the robot manipulator 100. These positions can be specified in terms of the positions of the end effector on each of the three-dimensional x, y and z axes of a robot Cartesian coordinate system. For some robotic applications, specifying only the position of the end effector is sufficient to enable the robot to perform a desired operation.

For other robotic applications, however, both the position and the orientation of the end effector are important. Thus, at each position the robot wrist 118 can be rotated about orthogonal x, y and z axes (representing an additional three degrees of freedom) to orient the end effector at desired orientations within the wrist's range of motion. The orientation of the end effector can be specified in terms of the extent of the angular rotation of the wrist 118 on each of the three axes: roll 121, pitch 122 and yaw 123. The position and orientation of the end effector at any point within the operating range of the robot manipulator 100 can therefore be described in terms of its position and orientation in the robot coordinate system.

The computer-based robot system controller 150 is programmed with a robot drive program. When executed by the controller 150, motion-control program segments of the drive program cause the robot arm assembly 114 and wrist 118 to drive the end effector through a predetermined or desired path of motion with respect to a workstation (not shown in Fig. 1). In abrasive applications, for example, the robot manipulator 100 typically drives the workpiece (e.g., a turbine blade, golf club head or other part) with respect to a fixed shaft that supports a moving wheel, belt or other abrasive product. Responsive to the robot drive program, the robot manipulator 100 drives the workpiece through the desired path of motion to abrade the workpiece with the abrasive product in the desired manner. In other applications, including abrasive applications, the robot manipulator 100 drives a tool or other end effector through a desired path of motion with respect to a fixed workpiece in the workstation.

The robot system controller 150 must be programmed with the motion-control or force-control program segments, or both. Force control is described in U.S. Patent Application No. 10/720592 entitled "An Industrial Robot With Controlled Flexibility and Simulated Force for Automated Assembly" filed on November 24, 2003 and assigned to the same assignee as the present invention. A number of known programming techniques, including the teach pendant, lead-through, kinematics model and computer simulation methods are typically used to program controller 150.

European patent application 0440588A1 discloses a system for monitoring parameters of movement of industrial robots. In particular, an inertial gyroscopic platform is mounted on the pincer of the robot and can detect values of acceleration on its three principal axes and the gyroscopic component so as to detect the angular component. Signals form the gyroscopic platform are supplied to a processing unit and then to a computer 11 where they are stored and can be subsequently processed by another calculating unit for off-line programming of the robot.

The teach pendant and lead-through techniques are described below.

The teach pendant programming method is disclosed generally in U.S. Pat. No. 4,589,810 (Heindl et al.). This "on-line" programming approach makes use of the robot to be programmed and a technician-actuated interface including a joystick and/or switches coupled to the robot controller. Using the interface, the programmer jogs the robot and moves the end effector through a programming path of motion with respect to the workstation. The points taught during programming correspond to the desired path of motion. At each of a selected series of programming points along the programming path of motion, the programmer jogs through the interface and causes the controller to store programming path point data characterizing the position and orientation of the end effector at each of the programming points.

Motion-control program segment generation software run by the controller 150 then uses the programming path point data to generate the motion-control program segments. When the motion program is executed by the controller 150, the motion-control program segments cause the robot manipulator 100 to drive the end effector smoothly through the programming path points along the desired path with a predetermined velocity profile. The programmer typically selects the programming path points through direct visual observation or feedback of the positions of the end effector with respect to the workstation. Unfortunately, the teach pendant programming method can be relatively slow and inefficient.

The first U.S. patent. to describe lead-through programming is U.S. Patent No. 4,408,286 (Kikuchi et al.). This programming method is different from the teach pendant method of Heindl et al. described above wherein the robot is moved through a programming path of motion by use of a robot teach pedant. Rather the lead-through programming technique uses a force sensor attached to the robot end effector to move the robot through the programming path points.

Several methods of lead-through teaching and handle assemblies that are attached to a robot and used for lead-through teaching are disclosed after Kikuchi. These are:
1. U.S. Pat. No. 4,367,532 to Crum et al., which teaches adding a power assistance system to waist, shoulder and elbow robot axes for ease in lead-through teaching and its handle design.
2. U.S. Pat. No. 5,880,956 to Graf teaches using a 6-DOF digitizer with a force sensor in robot lead-through teaching. This patent discloses a different method than the original robot lead-through idea disclosed in U.S. Pat. No. 4,408,286. Graf introduces an auxiliary device, a 6-DOF digitizer, into the lead-through teaching system.
3. U.S. Pat. No. 6,385,508 to Cheng et al., which teaches an embodiment for a lead-through handle and mounting mechanism.
4. US Pat. No. 6,212,443 to Nagata et al., which teaches a direct teaching apparatus and safe lead-through control method, including stopping robot motion when a signal received from a sensor detecting deformation of a compliance mechanism mounted on the robot exceeds a predetermined value.

Even though, as described above, there was developed in the prior art various techniques for lead-through methods for programming robots these techniques either have:
1. lead-through methods and handle assemblies that are too complicated to be implemented;
2. difficulty in attaching the handle assembly to the robot tooling; or
3. the system involves additional expensive devices and computers, which makes lead-through teaching impractical to be used in real-world applications.
Although the prior art has monitored and limited robot motor torque and Tool Center Point (TCP) speed, the safety issue has not been well addressed. Thus the safety concern is still a dominant factor that prevents the use of lead-through teaching in an industrial environment. Further, in all previous patents, an expensive force sensor has to be placed between the robot faceplate and end effector to realize the lead-through teaching. This results in a slow response when a heavy end effector such as a machining tool or work piece with a handle is attached to the force sensor.

The present invention addresses the critical issues of the robot lead-through teaching process, namely, its safety, intuitiveness and cost reduction.

### Summary of the Invention

An industrial robot comprising:
an accelerometer mounted on said robot and a controller connected to said robot for monitoring movement of a tool assembly attached to an end effector of said robot and stopping motion of said robot when said tool assembly movement exceeds a predetermined criteria for safety monitoring purposes during lead-through teaching of said robot.

A method for monitoring an industrial robot for safety during lead-through teaching of said robot comprising:
mounting an accelerometer on said robot and connecting a controller to said robot to monitor movement of a tool assembly attached to an end effector of said robot, and
stopping motion of said robot when said tool assembly movement exceeds a predetermined criteria.

### Description of the Drawing

Fig. 1 shows an industrial robot manipulator with a controller.
Fig. 2 shows the lead-through handle assembly for a welding gun end effector and the dial for scalable translation/orientation lead-through.
Fig. 3 shows the lead-through handle assembly for a robot machining end effector.
Fig. 4. shows a prototype lead-through handle with essential components.
Fig. 5 shows the relations among frames in the acceleration calculation.
Fig. 6 shows the acceleration monitoring function flow chart.
Fig. 7 shows an example result of acceleration monitoring.
Fig. 8 gives a diagram for the speed feedback only force control.
Fig. 9 illustrates the portion scaling method for translation/orientation lead-through.
Fig. 10 is a drawing of the fast clamping device.

### Detailed Description

As mentioned above, the present invention deals with key issues for robot lead-through teaching. The major components, each described in more detail below, of the present invention are:
1. a lead-through handle assembly;
2. a handle assembly acceleration monitoring algorithm and implementation;
3. combination of force sensor and space mouse lead-through teaching;
4. translation and orientation portion scaling for lead-through teaching;
5. a fast clamping system design and implementation.

### The Lead-Through Handle Assembly

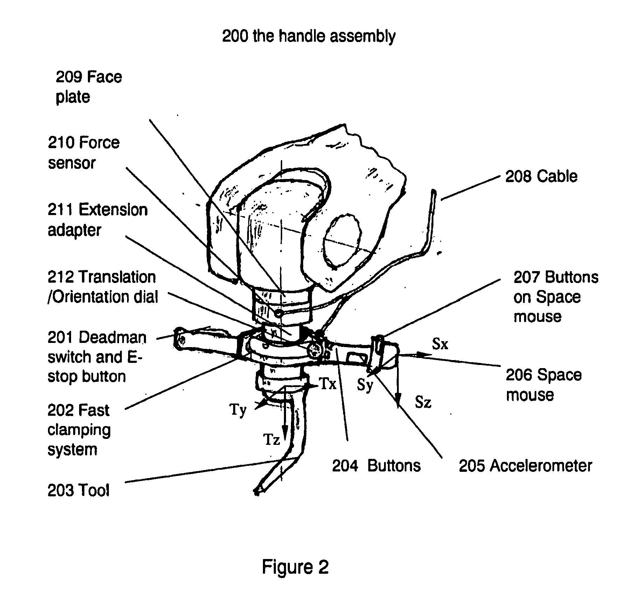

The lead-through handle assembly 200 is shown in Fig. 2 and includes: a) a three-position deadman switch and E-stop button 201 as used on a robot teach pendant to meet robot jogging safety requirements as set forth in the *American National Standard for Industrial Robot and Robot system - Safety Requirements* ANS/RIA R15.06-1999; b) an accelerometer 205 built in the handle and integrated into the robot safety circuitry to monitor the movement of the handle assembly 200; c) buttons 204 that are used as triggers to communicate with a controller and/or a computer; and d) a 6-DOF space mouse 206 utilized as an additional lead-through sensor input besides the force sensor 210 to lead the robot in longer distance jogging or to replace the force sensor 210 in lead-through teaching. Buttons 207 are also built on the space mouse assembly to duplicate the triggers provided by buttons 204 on the handle bar. Translation and rotation frames for both the force sensor 210 and space mouse 206 are mapped with the robot tool frame to achieve intuitive leading-through teaching. Using the accelerometer 205 during lead-through teaching allows the robot safety circuitry to be triggered to prevent further movement of the robot if the acceleration, integrated speed and distance exceed the predetermined values.

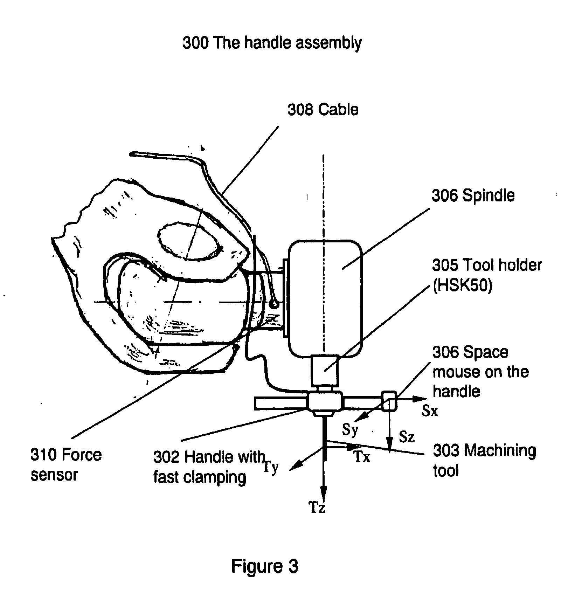

A fast clamping assembly 202 allows the lead-through handle to be easily attached to and detached from the end effector. There are at least two configurations for the fast clamping assembly. One is shown in Fig. 2 and the other is shown in Fig. 3. The one shown in Fig. 2 is for arc welding or painting tools when the extension adapter 211 is added between the tool 203 and force sensor 210. Handle 202 also includes translation/orientation dial or switch 212 whose function is described below.

Another configuration for the fast clamping assembly is shown in Fig. 3. This configuration is used for a machining end effector such as milling and sawing where a spindle and standard tool holder such as the industry standard HSK50 is used. However, the principles are the same as for the configuration shown in Fig. 2. In the configuration of Fig. 3, a spindle 306 is mounted on a force sensor 301. The spindle 306 has a standard tool holder 305. The lead-through handle 302 is clamped on the tool holder 305 for the machining tool 303. The space mouse 304 force/torque direction frame is aligned with the robot tool 303 frame to realize intuitive lead-through.

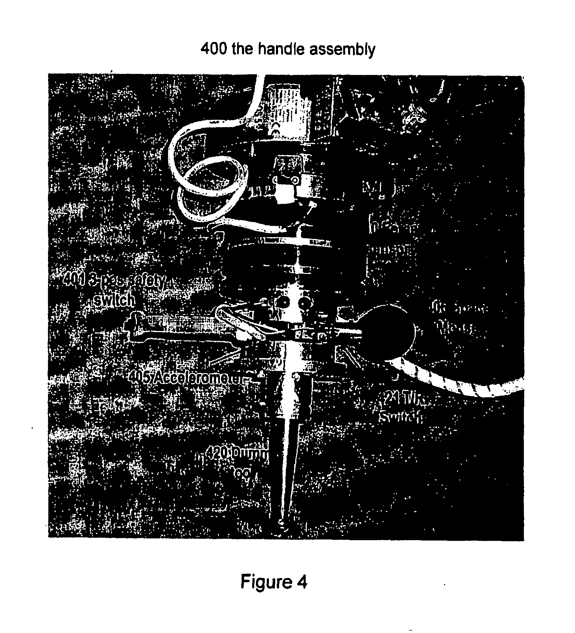

Fig. 4 shows an example of a lead-through handle assembly that is embodied in accordance with the configurations shown in Fig. 2 and 3. The handle of Fig. 4 includes a three-position safety switch 401, an accelerometer 405, a space mouse 406, a force sensor 410 and a scaling dial or switch 421 whose function is described below.

The system cost can be reduced dramatically when a space mouse, which costs less than 10 percent of a typical force sensor, is used alone as a lead-through device. With the alignment between the space mouse force/torque directions with the robot tool frame, an intuitive jogging feature is obtained. If the space mouse 206, 306 or 406 is used together with the force sensor 210, 310 or 410, the space mouse 206, 306 or 406 can be used to jog the robot manipulator 100 for longer distances and the force sensor 210, 310 or 410 is used to fine-tune the teaching position. A scaling dial or switch 421 is built on the handle assembly to vary the sensitivity scale of the translation and orientation lead-through.

Depending on if the lead-through handle uses or does not use the 6-DOF space mouse 206, 306 or 406 and including the standard teach pedant, there are four possible jogging modes as listed below in Table 1. Jogging modes 2, 3 and 4 can be used for lead-through teaching in accordance with the present invention. The functions of the jogging modes and usage are explained in the table.

**Table 1**

| **Robot "jogging" mode** | **Function** | **Usage** |
|---|---|---|
| 1. Teach pedant | Normal robot teach pedant jogging | Standard robot jog. |
| 2. Force sensor lead-through | Jogging robot with lead-through handle | Teach pedant can be used to jog the with force feedback on, which can prevent collision. |
| 3. Space mouse lead-through | Jogging robot with the space mouse | Leading-through without force sensor; intuitive jogging feature kept through mapping between tool and space mouse frame. |
| 4. Force sensor and space mouse lead-through | Jogging with lead-through handle and space mouse | Usually space mouse is used for longer distance movement and force sensor is used for fine movement. |

### End effector Assembly Acceleration Monitoring Algorithm And Implementation

As is described above, an accelerometer 205, 405 is integrated into the robot safety monitoring chain to add an extra layer of protection during lead-through teaching and monitor and stop robot motion when predetermined acceleration, integrated speed and distance values are reached. The acceleration, speed and distance thresholds can be individually set by the user to obtain different sensitivity. Combining the acceleration monitoring with the prior art motor torque monitoring enhances the safety of lead-through teaching by an extra safety layer which is more than that required by the robot safety standard ANS/RIA R15.06-1999.

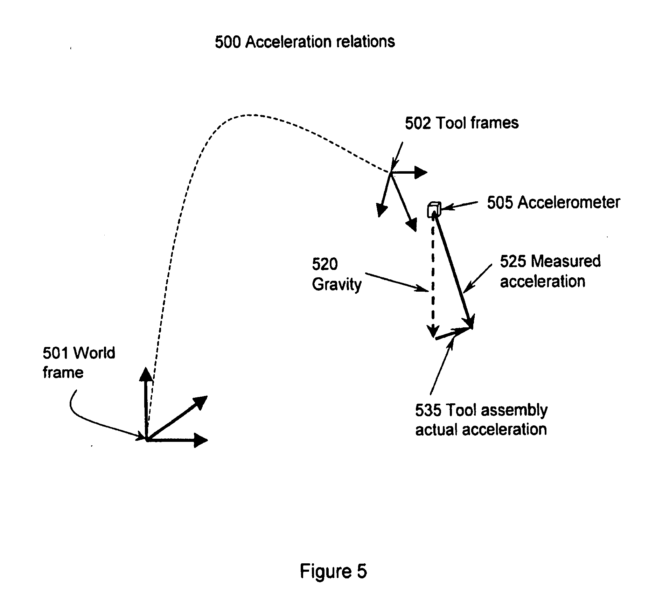

As illustrated in Fig. 5, the position of the accelerometer, 205 of Fig. 2 or 405 of Fig. 4, is known in the robot world frame 501. At any moment, the robot tool frame 502 is defined by its transformation matrix T. The transformation matrix can be calculated by use of current robot joint values through forward kinematics. Since the gravity 520 is constant at 1g all of the time, the end effector assembly acceleration 535 can be calculated by subtracting the gravity 520 from the measured acceleration 525.

The integration criteria used for acceleration monitoring in accordance with the present invention is that when the acceleration on the end effector assembly exceeds a certain value, for example, 10% of its maximum value, the integration of acceleration is started for the speed and then the speed is integrated into distance continuously until the acceleration falls back to within the certain value. The falling back of the acceleration to within the certain value indicates the acceleration is decreasing in that direction or the acceleration direction is changed. The criteria for stopping the robot is that the maximum acceleration exceeds its threshold value and the speed and the distance reach their thresholds at the same time.

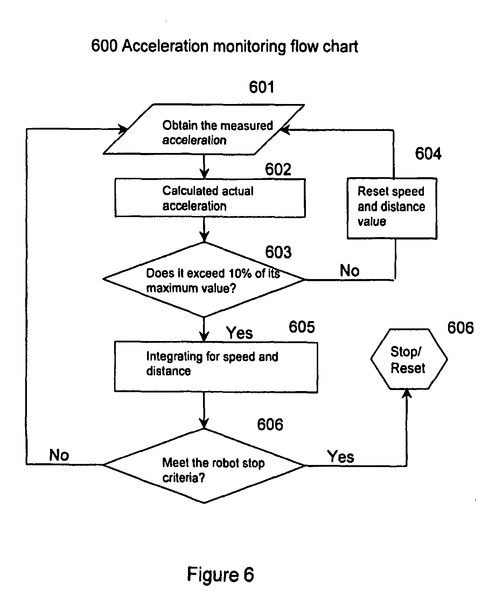

Fig. 6 shows a flow chart diagram 600 for the acceleration monitoring. The measured acceleration is obtained in 601 and the actual acceleration is calculated in 602 by subtracting the gravity from the measured acceleration. In decision block 603 it is detected if the actual calculated acceleration does or does not exceed a predetermined value which, in this example, is set at 10% of the acceleration's maximum value. If the answer is no, then the speed and distance values are reset in 604. If the answer is yes, then an integration is performed in 605 for the speed and distance. Decision block 606 determines if the speed and distance integration of 605 both meet the robot stop criteria at the same time. If the answer is yes, then the robot is stopped in 607. If the answer is no, then the flow diagram returns back to 601.

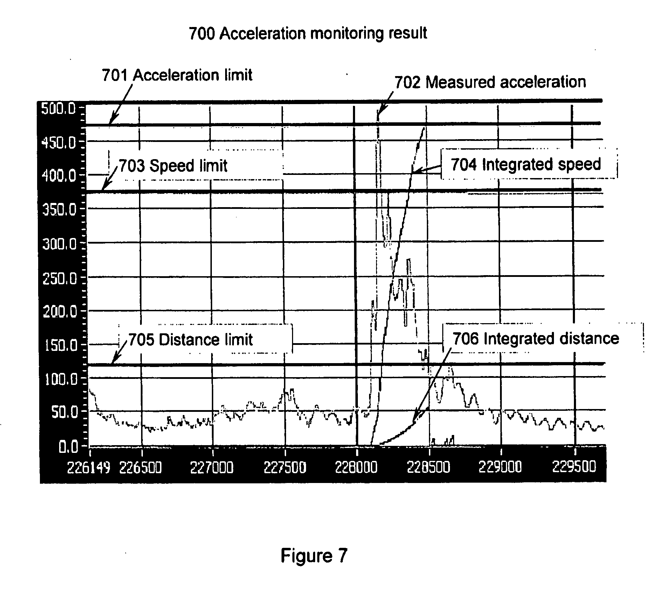

Fig. 7 shows an actual plot from a computer screen where both the acceleration and speed exceeded their thresholds but the distance threshold is not reached. It is necessary to use color for the traces shown in Fig. 7 in order to most clearly show these results.

### Combination of Force Sensor and Space Mouse Lead-Through Teaching

Use of both a primary force detector such as a 6-DOF force sensor and an additional force-sensing device such as a 6-DOF space mouse as the input in lead-through teaching increases the responsiveness as compared to only when the force sensor is used. Furthermore, the use of a 6-DOF force sensor creates a collision free teaching environment when it is used with a space mouse.

Since a force sensor is usually attached to a tool, part or other end effector (see Figs. 2, 3 and 4), the force sensor has to have a large load range and therefore a low resolution. Low responsiveness is always a problem when only a force sensor is used in lead-through teaching. In some circumstances such as in a robot milling process, lead-through teaching becomes impossible if only the force sensor is used. A space mouse (as shown in Figs. 2, 3 and 4) is designed to be sensitive to the jogging force since it is very light in weight and has a small spring constant. With the configuration shown in Figs. 2, 3 and 4, the space mouse can be used in large distance lead-through teaching while the force sensor is used for collision prevention when the end effector tool touches the part.

In addition, a novel force control algorithm is used in lead-through teaching with the combination of force sensor and space mouse input. Only speed feedback is used in robot control during this lead-through motion. This control algorithm significantly reduces the actual collision force if the end effector collides with surroundings, such as work pieces or fixtures.

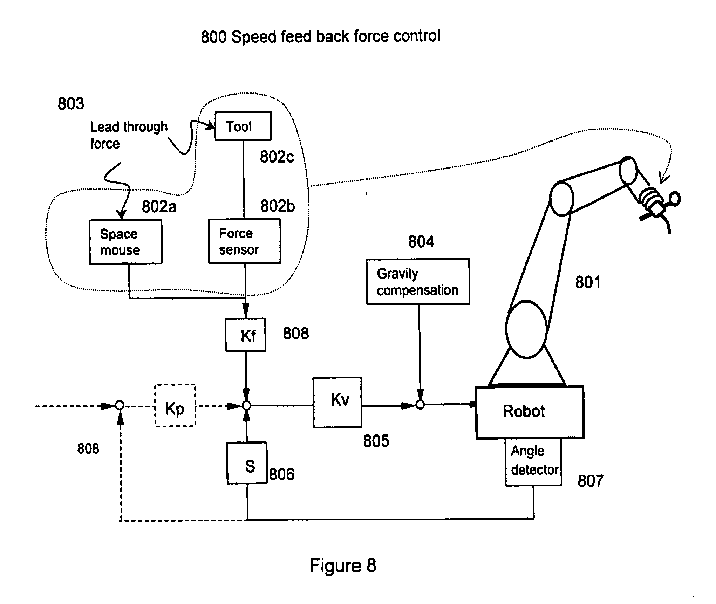

Fig. 8 is a diagram that shows the speed feedback control described directly above and the lead-through force input arrangement. The control scheme shown in Fig. 8 has three inputs. One input is speed feedback from the combination of an angle detector 807 attached to the robot 801 and an element 806 which takes the derivative of the output of the angle detector 807. The angle detector 807 is an encoder or resolver on the motor of the robot joint. Another input is the well known gravity compensation 804.

The third input, which is summed at the same summer as the first input, is force input with force feedback gain Kf 808 in combination with the space mouse and force sensor. As shown in Figs. 2 to 4, the space mouse and force sensor are included on the handle of the present invention. These elements are shown symbolically in Fig. 8 as space mouse 802a, force sensor 802b and end effector tool 802c.

When there is a force sensor 802b in the force feedback chain, the force sensor is located between the robot 801 and the end effector tool 802c, the collision force is controlled by both the speed feedback control loop 806 and 807 and the force feedback control loop 802b and 802c in combination with velocity gain Kv 805. This control avoids damaging the tool, workpiece and robot in the event of a collision between the end effector and workpiece or fixtures.

When the space mouse 802a force input is used alone, there is no force feedback in the feedback chain, the contact force will be regulated by the velocity gain Kv 805. This control scheme results in a much smaller collision force then would occur if the control scheme used the lead-through force control loop that combines speed 805, 806 and 807 and position feedback 807 and 808 described in prior art US Pat. 6,212,443. Position feedback loop 808 is shown in dotted lines in Fig. 8 as it is not used in the present invention.

Also, use of the combination of a 6-DOF force sensor and a 6-DOF space mouse, as the input in lead-through teaching, increases the system responsiveness. When the space mouse is used alone in robot lead-though teaching, the responsiveness will be kept while the collision prevention will need to be provided by robot motor torque and regulated by speed feedback gain Kv. The space mouse only configuration for robot lead-through teaching is useful in path generation where the end effector does not have to contact the work piece such as arc welding and painting applications.

In one embodiment of the speed feedback control, the gravity compensation 804, the gains 805 and 808, the derivative taking element 806 and the summers shown in Fig. 8 are all implemented in software in the controller 150 attached to the robot 100.

### Scalable Translation And Orientation Motion Control In Lead-Through Teaching

Separating translation and orientation during lead-through teaching decouples these two robot motions and makes the teaching of the path a lot easier. In U.S. Pat. No.6,385,508, an open-close switch is used to switch between these two modes. However, sometimes, a certain amount of orientation moving is desirable in translation lead-through teaching and vice versa. Therefore, a scalable combination of translation and orientation is desired and the present invention provides this scalability. In accordance with the present invention, a potentiometer or dial on the handle assembly (see 212 in Fig. 2 and 421 in Fig. 4) is used to scale the portion of translation and orientation.

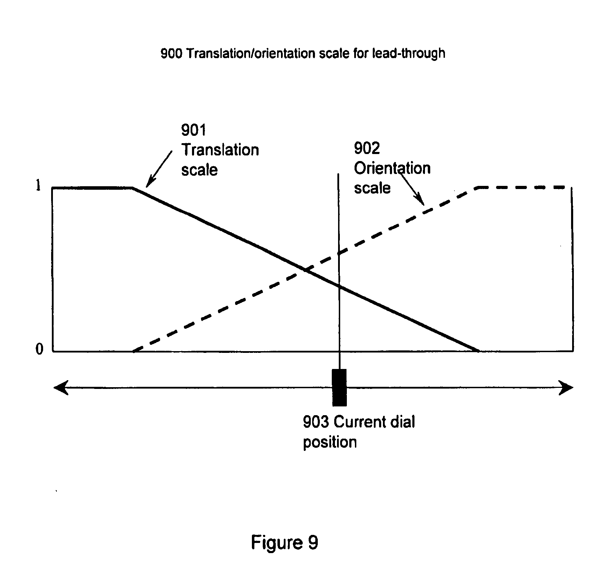

Fig. 9 illustrates how the scalable translation/orientation lead-through teaching works. While the dial moves linearly or a potentiometer knob turns around, the translation and orientation scales 901 and 902 are changing between 0 and 1 along the designated lines in the figure. It is entirely translation motion when the dial is in the range at the far left and entirely orientation motion when the dial is in the range at the far right. In between these two ranges, the scales vary proportionally. Thus the use of the scalable translation and orientation motion control allows lead-through teaching to have different translation and orientation sensitivities to meet different operator needs for teaching different paths with different end effectors.

### Fast Clamping System Design And Implementation

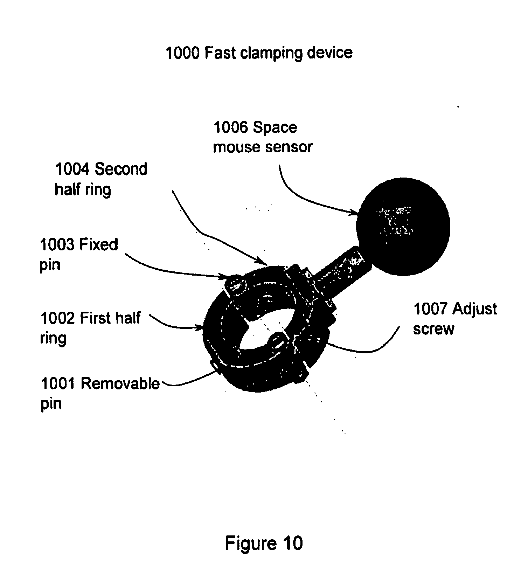

The fast clamping system 1000 makes for easy attachment and detachment of the handle without the need for specific tools other than a screwdriver or a wrench. As shown in Fig. 10, the fast clamping system consists of a first half ring 1002, a second half ring 1004, a fixed pin 1003, a removable pin 1001, adjusting screws 1007 and a connection surface with threaded holes (not shown in Fig. 10) for the space mouse 1106 and/or the three-position safety switch.

At the end of the removable pin 1001, there is a screw nut 1008. The nut 1008 can be unscrewed off and the removable pin 1001 can be taken off, allowing the two half rings 1002, 1004 to rotate around the fixed pin 1003 to make a opening for cylindrical type end effectors such as an arc welding gun, a milling tool holder or a deburring tool holder. The inner diameter of the two half rings 1002, 1004 is slightly bigger than the outer diameter of the end effector to allow the rings to easily clamp onto the end effector.

When the rings 1002, 1004 are clamped on the end effector, the removable pin 1001 is then inserted and screwed on. The adjust screws 1007 are then used to tighten up the ring assembly on the end effector. Different inner diameters and shapes of the ring can be made to fit end effectors with different outer diameters an/or different shapes. The fast clamping system 1000 allows the intuitive teaching device to be attached to and detached from the end effector in minutes.

It is to be understood that the description of the foregoing exemplary embodiment(s) is (are) intended to be only illustrative, rather than exhaustive, of the present invention. Those of ordinary skill will be able to make certain additions, deletions, and/or modifications to the embodiment(s) of the disclosed subject matter without departing from the scope of the invention, as defined by the appended claims.

## Claims

1. An industrial robot (100) comprising:
an accelerometer (205, 405) mounted on said robot (100) and a controller (150) connected to said robot (100) for monitoring movement of a tool assembly (203) attached to an end effector (120) of said robot (100) and stopping motion of said robot (100) when said tool assembly (203) movement exceeds a predetermined criteria for safety monitoring purposes during lead-through teaching of said robot (100).

2. The industrial robot (100) of claim 1 wherein said controller (150) stops movement of said robot (100) when said controller (150) determines from a signal from said accelerometer (205, 405) when the values of said actual acceleration, speed and distance traveled exceed at the same time their respective threshold values during lead-through teaching of said robot (100).

3. The industrial robot (100) of claim 1 wherein said accelerometer (205, 405) is mounted on a handle (200, 300) attached to said robot end effector (120).

4. The industrial robot (100) of claim 3 wherein said handle (200, 300) attached to said robot end effector (120) comprises:
a deadman switch (201, 401) ;
means for stopping said robot (100) in an emergency;
means (204) for communicating with said controller (150) connected to said industrial robot (100) ; and
either a space mouse (206, 306, 406) or a force sensor (210, 310, 410).

5. The industrial robot (100) of claim 4 wherein said handle (200, 300) clamped to said end effector (120) further comprises a fully adjustable device (401) to permit scalable translation and orientation movement of said end effector (120) during lead-through teaching of said robot (100) .

6. The industrial robot (100) of claim 3 wherein said handle (200, 300) has means (202) for clamping said handle (200, 300) to said robot end effector (120).

7. The industrial robot (100) of claim 6 wherein said means (202) for clamping said handle (200, 300) to said robot end effector (120) is a means (1000) for removably clamping said handle (200, 300) to said end effector (120).

8. The industrial robot (100) of claim 7 wherein said means (1000) for removably clamping said handle (200, 300) to said end effector (120) comprises:
a first split ring (1002);
a second split ring (1004) connected to said first split (1002) ring and capable of rotational movement in relation to said first split first ring (1002) ; and
means (1001, 1003, 1007, 1008) for locking said first split ring (1002) to said second split ring (1004) when said handle (200, 300) is clamped to said end effector (120).

9. The industrial robot (100) of claim 5 wherein said fully adjustable device to permit scalable translation and orientation movement of said end effector (120) during lead-through teaching of said robot (100) is a potentiometer or a dial (401).

10. The industrial robot (100) of claim 3 wherein both a space mouse (206, 306, 406) and a force sensor (210, 310, 410) are mounted on said handle (200, 300) and an input is provided to said controller (150) during lead-through teaching of said robot (100) combined from signals from said force sensor (210, 310, 410) and space mouse (206, 306, 406) and a signal representative of the speed of said robot (100).

11. A method for monitoring an industrial robot (100) for safety during lead-through teaching of said robot (100), the method comprising:
mounting an accelerometer (205, 405) on said robot (100) and connecting a controller (150) to said robot (100) to monitor movement of a tool assembly (203) attached to an end effector (120) of said robot (100), and
stopping motion of said robot (100) when said tool assembly (203) movement exceeds a predetermined criteria.

12. The method of claim 11, wherein it further comprises:
determining (602) actual acceleration of said tool assembly (203) attached to said end effector (120) and when the determined actual acceleration exceeds said threshold value, determining (606) if values of speed and distance traveled by said tool assembly (203) attached to the end effector (120) each exceeds an associated threshold value; and
stopping (607) motion of said robot (100) only when said actual acceleration and said speed and distance traveled all simultaneously exceed their associated threshold values.

13. The method of claim 12 wherein said actual acceleration is determined by subtracting gravity from said actual acceleration measured by said accelerometer (205, 405).

14. The method of claim 12 further comprising resetting (604) said speed and distance values when said actual acceleration does not exceed said associated predetermined value.

15. The method of claim 11 wherein said mounting an accelerometer (205, 405) on said robot (100) further comprises:
mounting said accelerometer (205, 405) on a handle (200, 300); and
attaching said handle (200, 300) to an end effector (120) of said robot (100).

16. The method of claim 15 wherein said handle (200, 300) is attached to said robot end effector (120) by clamping said handle (200, 300) to said end effector (120).

17. The method of claim 15 further comprising mounting a device (401) on said handle (200, 300) that permits a scalable combination of orientation motion and translation method of said robot (100) during said lead-through teaching.

18. The method of claim 15 further comprising removably attaching said handle (200, 300) to said end effector (120).

## Patentansprüche

1. Industrieroboter (100), umfassend:
einen an dem Roboter (100) angebrachten Beschleunigungsmesser (205, 405) und eine mit dem Roboter (100) verbundene Steuerung (150) zum Überwachen der Bewegung einer an einem Endeffektor (120) des Roboters (100) angebrachten Werkzeugbaugruppe (203) und zum Anhalten der Bewegung des Roboters (100), wenn die Bewegung der Werkzeugbaugruppe (203) während des Durchführungs-Belehrens des Roboters (100) ein vorbestimmtes Kriterium für Sicherheitsüberwachungszwecke überschreitet.

2. Industrieroboter (100) nach Anspruch 1, wobei die Steuerung (150) die Bewegung des Roboters (100) anhält, wenn die Steuerung (150) aus einem Signal aus dem Beschleunigungsmesser (205, 405) bestimmt, wann die Werte der tatsächlichen Beschleunigung, Geschwindigkeit und zurückgelegten Distanz während des Durchführungs-Belehrens des Roboters (100) gleichzeitig ihre jeweiligen Schwellenwerte überschreiten.

3. Industrieroboter (100) nach Anspruch 1, wobei der Beschleunigungsmesser (205, 405) an einem an dem Roboter-Endeffektor (120) angebrachten Griff (200, 300) angebracht ist:

4. Industrieroboter (100) nach Anspruch 3, wobei der an dem Endeffektor (120) Roboter-angebrachte Griff (200, 300) folgendes umfaßt:
einen Totmannschalter (201, 401);
ein Mittel zum Anhalten des Roboters (100) in einem Notfall;
ein Mittel (204) zum Kommunizieren mit der mit dem Industrieroboter (100) verbundenen Steuerung (150); und
entweder eine Space Mouse (206, 306, 406) oder einen Kraftsensor (210, 310, 410).

5. Industrieroboter (100) nach Anspruch 4, wobei der an den Endeffektor (120) angeklemmte Griff (200, 300) ferner eine voll justierbare Anordnung (401) zum Ermöglichen einer skalierbaren Translations- und Orientierungsbewegung des Endeffektors (120) während des Durchführungs-Belehrens des Roboters (100) umfaßt.

6. Industrieroboter (100) nach Anspruch 3, wobei der Griff (200, 300) ein Mittel (202) zum Anklemmen des Griffs (200, 300) an dem Roboter-Endeffektor (120) aufweist.

7. Industrieroboter (100) nach Anspruch 6, wobei das Mittel (202) zum Anklemmen des Griffs (200, 300) an dem Roboter-Endeffektor (120) ein Mittel (1000) zum entfernbaren Anklemmen des Griffs (200, 300) an dem Endeffektor (120) ist.

8. Industrieroboter (100) nach Anspruch 7, wobei das Mittel (1000) zum entfernbaren Anklemmen des Griffs (200, 300) an dem Endeffektor (120) folgendes umfaßt:
einen ersten Splitring (1002);
einen mit dem ersten Splitring (1002) verbundenen zweiten Splitring (1004) mit der Fähigkeit zu Drehbewegung in bezug auf den ersten Splitring (1002); und
Mittel (1001, 1003, 1007, 1008) zum Verriegeln des ersten Splitrings (1002) mit dem zweiten Splitring (1004), wenn der Griff (200, 300) an den Endeffektor (120) angeklemmt wird.

9. Industrieroboter (100) nach Anspruch 5, wobei die voll justierbare Anordnung zum Ermöglichen einer skalierbaren Translations- und Orientierungsbewegung des Endeffektors (120) während des Durchführungs-Belehrens des Roboters (100) ein Potentiometer oder eine Drehscheibe (401) ist.

10. Industrieroboter (100) nach Anspruch 3, wobei sowohl eine Space Mouse (206, 306, 406) als auch ein Kraftsensor (210, 310, 410) an dem Griff (200, 300) angebracht sind und der Steuerung (150) während des Durchführungs-Belehrens des Roboters (100) eine Eingabe bereitgestellt wird, die aus Signalen aus dem Kraftsensor (210, 310, 410) und der Space Mouse (206, 306, 406) und einem die Geschwindigkeit des Roboters (100) darstellenden Signal kombiniert wird.

11. Verfahren zum Überwachen eines Industrieroboters (100) bezüglich Sicherheit während des Durchführungs-Belehrens des Roboters (100), wobei das Verfahren die folgenden Schritte umfaßt:
Anbringen eines Beschleunigungsmessers (205, 405) an dem Roboter (100) und Verbinden einer Steuerung (150) mit dem Roboter (100) zum Überwachen der Bewegung einer an einem Endeffektor (120) des Roboters (100) angebrachten Werkzeugbaugruppe (203) und
Anhalten der Bewegung des Roboters (100), wenn die Bewegung der Werkzeugbaugruppe (203) ein vorbestimmtes Kriterium überschreitet.

12. Verfahren nach Anspruch 11, ferner mit den folgenden Schritten:
Bestimmen (602) einer tatsächlichen Beschleunigung der an dem Endeffektor (120) angebrachten Werkzeugbaugruppe (203), und wenn die bestimmte tatsächliche Beschleunigung den Schwellenwert überschreitet, Bestimmen (606), ob Werte der Geschwindigkeit und zurückgelegten Distanz der an dem Endeffektor (120) angebrachten Werkzeugbaugruppe (203) jeweils einen zugeordneten Schwellenwert überschreiten; und
Anhalten (607) der Bewegung des Roboters (100), nur dann, wenn die tatsächliche Beschleunigung und die Geschwindigkeit und zurückgelegten Distanz alle gleichzeitig ihre zugeordneten Schwellenwerte überschreiten.

13. Verfahren nach Anspruch 12, wobei die tatsächliche Beschleunigung durch Subtrahieren der Schwerkraft von der durch den Beschleunigungsmesser (205, 405) gemessenen tatsächlichen Beschleunigung bestimmt wird.

14. Verfahren nach Anspruch 12, ferner mit dem Schritt des Zurücksetzens (604) der Geschwindigkeits- und Distanzwerte, wenn die tatsächliche Beschleunigung den zugeordneten Wert nicht überschreitet.

15. Verfahren nach Anspruch 11, wobei das Anbringen eines Beschleunigungsmessers (205, 405) an dem Roboter (100) ferner die folgenden Schritte umfaßt:
Anbringen des Beschleunigungsmessers (205, 405) an einem Griff (200, 300); und
Anbringen des Griffs (200, 300) an einem Endeffektor (120) des Roboters (100).

16. Verfahren nach Anspruch 15, wobei der Griff (200, 300) durch Anklemmen des Griffs (200, 300) an dem Endeffektor (120) an dem Roboter-Endeffektor (120) angebracht wird.

17. Verfahren nach Anspruch 15, ferner mit dem Schritt des Anbringens einer Anordnung (401) an dem Griff (200, 300), die eine skalierbare Kombination von Orientierungsbewegung und Translationsmethode des Roboters (100) während des Durchführungs-Belehrens ermöglicht.

18. Verfahren nach Anspruch 15, ferner mit dem Schritt des entfernbaren Anklemmens des Griffs (200, 300) an dem Endeffektor (120).

## Revendications

1. Robot industriel (100) comprenant :
un accéléromètre (205, 405) monté sur ledit robot (100) et un dispositif de commande (150) connecté audit robot (100) pour contrôler le mouvement d'un ensemble outil (203) attaché à un organe terminal effecteur (120) dudit robot (100) et pour arrêter le mouvement dudit robot (100) lorsque le mouvement dudit ensemble outil (203) dépasse un critère prédéterminé pour des besoins de contrôle de sécurité pendant l'apprentissage dudit robot (100) par un dispositif de commande manuelle.

2. Robot industriel (100) selon la revendication 1, dans lequel ledit dispositif de commande (150) arrête le mouvement dudit robot (100) lorsque ledit dispositif de commande (150) détermine à partir d'un signal venant dudit accéléromètre (205, 405) quand les valeurs de ladite accélération réelle, vitesse et distance parcourue dépassent en même temps leurs valeurs seuils respectives pendant l'apprentissage dudit robot (100) par un dispositif de commande manuelle.

3. Robot industriel (100) selon la revendication 1, dans lequel ledit accéléromètre (205, 405) est monté sur une poignée (200, 300) attachée audit organe terminal effecteur (120) du robot.

4. Robot industriel (100) selon la revendication 3, dans lequel ladite poignée (200, 300) attachée audit organe terminal effecteur (120) du robot comprend :
un commutateur d'homme mort (201, 401) ;
un moyen pour arrêter ledit robot (100) en cas d'urgence ;
un moyen (204) pour communiquer avec ledit dispositif de commande (150) connecté audit robot industriel (100) ; et
soit une souris spatiale (206, 306, 406), soit un capteur de force (210, 310, 410).

5. Robot industriel (100) selon la revendication 4, dans lequel ladite poignée (200, 300) fixée par serrage sur ledit organe terminal effecteur (120) comprend en outre un dispositif complètement réglable (401) pour permettre la translation échelonnable et le mouvement d'orientation dudit organe terminal effecteur (120) pendant l'apprentissage dudit robot (100) par un dispositif de commande manuelle.

6. Robot industriel (100) selon la revendication 3, dans lequel ladite poignée (200, 300) a un moyen (202) pour fixer par serrage ladite poignée (200, 300) audit organe terminal effecteur du robot (120).

7. Robot industriel (100) selon la revendication 6, dans lequel ledit moyen (202) pour fixer par serrage ladite poignée (200, 300) audit organe terminal effecteur (120) du robot est un moyen (1000) pour fixer par serrage ladite poignée (200, 300) de manière amovible audit organe terminal effecteur (120).

8. Robot industriel (100) selon la revendication 7, dans lequel ledit moyen (1000) pour fixer par serrage ladite poignée (200, 300) de manière amovible audit organe terminal effecteur (120) comprend :
une première bague fendue (1002) ;
une deuxième bague fendue (1004) rattachée à ladite première bague fendue (1002) et capable d'un mouvement de rotation par rapport à ladite première bague fendue (1002) ; et
des moyens (1001, 1003, 1007, 1008) pour bloquer ladite première bague fendue (1002) sur ladite deuxième bague fendue (1004) lorsque ladite poignée (200, 300) est fixée par serrage audit organe terminal effecteur (120) .

9. Robot industriel (100) selon la revendication 5, dans lequel ledit dispositif complètement réglable pour permettre la translation échelonnable et le mouvement d'orientation dudit organe terminal effecteur (120) pendant l'apprentissage dudit robot (100) par un dispositif de commande manuelle est un potentiomètre ou un cadran (401).

10. Robot industriel (100) selon la revendication 3, dans lequel une souris spatiale (206, 306, 406) et un capteur de force (210, 310, 410) sont tous deux montés sur ladite poignée (200, 300) et une entrée est fournie audit dispositif de commande (150) pendant l'apprentissage dudit robot (100) par un dispositif de commande manuelle, combinée à partir de signaux provenant dudit capteur de force (210, 310, 410) et de ladite souris spatiale (206, 306, 406) et d'un signal représentatif de la vitesse dudit robot (100).

11. Procédé pour contrôler un robot industriel (100) afin d'assurer la sécurité pendant l'apprentissage dudit robot (100) par un dispositif de commande manuelle, ce procédé comprenant :
le montage d'un accéléromètre (205, 405) sur ledit robot (100) et la connexion d'un dispositif de commande (150) audit robot (100) pour contrôler le mouvement d'un ensemble outil (203) attaché à un organe terminal effecteur (120) dudit robot (100), et
l'arrêt du mouvement dudit robot (100) lorsque le mouvement dudit ensemble outil (203) dépasse un critère prédéterminé.

12. Procédé selon la revendication 11, qui comprend en outre :
la détermination (602) de l'accélération réelle dudit ensemble outil (203) attaché audit organe terminal effecteur (120) et, lorsque l'accélération réelle déterminée dépasse ladite valeur seuil, la détermination (606) de si les valeurs de vitesse et de distance parcourue par ledit ensemble outil (203) attaché à l'organe terminal effecteur (120) dépassent chacune une valeur seuil associée ; et
l'arrêt (607) du mouvement dudit robot (100) seulement lorsque ladite accélération réelle et ladite vitesse et distance parcourue dépassent toutes simultanément leurs valeurs seuils associées.

13. Procédé selon la revendication 12, dans lequel ladite accélération réelle est déterminée en soustrayant la gravité de ladite accélération réelle mesurée par ledit accéléromètre (205, 405).

14. Procédé selon la revendication 12, comprenant en outre la remise à zéro (604) desdites valeurs de vitesse et de distance lorsque ladite accélération réelle ne dépasse pas ladite valeur prédéterminée associée.

15. Procédé selon la revendication 11, dans lequel ledit montage d'un accéléromètre (205, 405) sur ledit robot (100) comprend en outre :
le montage dudit accéléromètre (205, 405) sur une poignée (200, 300) ; et
la fixation de ladite poignée (200, 300) à un organe terminal effecteur (120) dudit robot (100).

16. Procédé selon la revendication 15, dans lequel ladite poignée (200, 300) est attachée audit organe terminal effecteur (120) en fixant par serrage ladite poignée (200, 300) audit organe terminal effecteur (120).

17. Procédé selon la revendication 15, comprenant en outre le montage d'un dispositif (401) sur ladite poignée (200, 300) qui permet une combinaison échelonnable de mouvement d'orientation et de procédé de translation dudit robot (100) pendant ledit apprentissage par un dispositif de commande manuelle.

18. Procédé selon la revendication 15, comprenant en outre la fixation amovible de ladite poignée (200, 300) audit organe terminal effecteur (120).
